# EUROPEAN PATENT SPECIFICATION

(11) **EP 2 817 789 B1**
(45) Date of publication and mention of the grant of the patent: **05.04.2017**
(21) Application number: 13702657.1
(22) Date of filing: 07.02.2013
(51) Int. Cl.: G07D 7/08

(54) **AUDIBLE DOCUMENT IDENTIFICATION FOR VISUALLY IMPAIRED PEOPLE**
HÖRBARE DOKUMENTENIDENTIFIZIERUNG FÜR SEHBEHINDERTE PERSONEN
IDENTIFICATION SOUS FORME AUDIBLE D'UN DOCUMENT POUR PERSONNES DONT LA VUE EST ALTÉRÉE

(30) Priority: 23.02.2012 EP 12001217
(43) Date of publication of application: 31.12.2014
(73) Proprietor: Sicpa Holding SA, 1008 Prilly (CH)
(72) Inventor: MULLER, Edgar, CH-1012 Lausanne (CH)
(74) Representative: Hoffmann Eitle
(86) International application number: PCT/EP2013/052404
(87) International publication number: WO 2013/124160

(56) References cited:
- EP-A1- 1 667 073
- WO-A1-2006/097900
- DE-A1- 4 325 027
- US-A1- 2003 183 012
- US-A1- 2007 221 731
- US-A1- 2007 287 490
- US-B1- 6 718 306

## Description

### Background of the Invention

The present invention concerns the aural identification of documents or articles. It discloses an audible document identification feature intended in particular to assist the visually impaired people in identifying documents or articles, such as currency, identity, or access documents, as well as any other type of documents or products.

### State of the Art

Document, particularly currency identification in everyday transactions represents a major hurdle for the visually impaired or blind people who must rely almost exclusively on their tactile sense for assessing the nature and genuineness of a document, e.g. banknote.

For assessing the genuineness of currency, blind people rely on the characteristic touch and stiffness of imprinted (banknote) paper, as well as on the presence of tactile relief (e.g. Intaglio). The denomination of a banknote may also be assessed in a tactile way by comparing the length of the banknote with some tactile benchmark, e.g. by folding the banknote along a stretched finger.

There is, on the other hand, still a lack of features particularly designed for the blind people. The US National Research Council has for this reason encouraged the development of particular currency features for the visually impaired people in a report published in 1995 ("Currency Features for Visually Impaired People", National Academic Press, 1995).

Following the publication of said report, some efforts have been made in developing particular tactile authentication features, such as embossing, modified corners or punched-out holes, which can be perceived by the visually impaired through his tactile sense, and which carry information about the nature and the denomination of the banknote in question. Reference is made to US 2004/0008871 A1 (Smith), EP 1 741 564 A1 (Reich et al.), WO 2009/050733 A2 (Jayaraman), US 2008/0134849 A1 (McGough), and US 2010/0164216 A1 (Fracek).

However, such merely tactile features did not prove up to now to be sufficiently reliable for the blind in order to distinguish authentic from counterfeit documents (e.g. currency), mainly due to the rather crude nature of the tactile sense. For these reasons efforts have also been made to translate visual authentication features to the auditory which provides for a much finer distinction. Such translation must be effectuated by an electronic device serving the particular purpose.

US 3,906,449 (Marchak) discloses a paper money identifier which, upon scanning along a banknote, transposes optical translucency values into musical sounds of varying pitch height. Its shortcoming isthat there is no direct correlation between the audible sound displayed and the document's nature or value; such correlation must be established by the human user through a comparison with authentic specimen and learning.

US 5,692,068 (Bryenton) discloses a hand-held portable banknote reader which comprises imaging means, memory means and processing means, which is enabled to compare a determined pattern on the banknote with an internally stored pattern, and to communicate to the human user the presence of a valid banknote by voice. However, it has the shortcoming of not giving the human user a direct access to security features comprised on the document, i.e. the indication by voice is not a translation of a document property, but a mere indication of a comparison result.

A reading apparatus for the visually impaired people, serving to assess banknotes and other documents, has been disclosed in WO 97/30415 A1 (Sears). The apparatus decodes the image obtained from the document into its symbolic meaning through optical character recognition (OCR), and reproduces said meaning through a speech synthesizer. The documents are scanned with the help of a mouse-type device, and the apparatus can be used to read any character-printed information, e.g. on food packaging, pill bottles, price tags, banknotes, as well as on printed sheets. It requires, however, the information to be available in the form of a recognizable character set and in a recognizable language; otherwise the OCR and/or the speech synthesizer may not properly work in reproducing the symbolic contents.

Further technology for the visually impaired people has also been disclosed in DE 197 06 966 A1 (Wendl) and in US 2008/0130980 A1 (Gildersleeve et al.) A product identification is also known from US2007/0221731 A1 (Ricci) in which a marker put on the product can be excited by a reader, the response must be decoded and then a tone is provided to a visually impaired user.

There is still a need for an audible information feature, i.e. a feature on the document which is easily translated into audible information, for the visually impaired people, and which can be implemented on security documents such as banknotes, value documents value, identity documents, access documents or other right-conferring documents, as well as on any kind of article. Said audible information feature on the document or article should be able to represent any spoken language and any sound which can be perceived by the human ear, and it should be sufficiently compact such as to allow the embodying of a useful amount of information even on a small document area such as is typically available on a banknote.

A shortcoming of many of the hitherto proposed features for the visually impaired or blind people is further that they do not rely on any particular document security means, with the consequence that such features can be easily imitated by a counterfeiter. E.g. a currency authentication feature by the means of cut-out edges or punched-out holes can be readily imitated with elementary tools.

### Summary of the invention

It is therefore the object of the present invention to propose a reliable security feature for the visually impaired or blind people which cannot be easily imitated by a counterfeiter.

The present invention solves the stated technical problem by providing audible information in or on the document, which is implemented in the form of a spectrogram, also called "time-frequency distribution" or "frequency versus-time-function", which indicates how the spectral density of the signal varies with time. Since the spectrogram relates to audible information it is also called sonogram or voice print.

According to the invention, a document or article carrying information for the audible authentication of said document or article is characterized in that said information is present in or on the document or article in the form of a spectrogram; the spectrogram being embodied using document security means.

In the context of the present description, "document security means" shall mean any particular material-based or material-implemented feature, which can be machine-read on the document or article, and which serves to distinguish the document or article in question from a document or article not carrying such feature.

### Brief description of the drawings

The invention can be explained with the help of the following figures:
- **Fig. 1**: illustrates the derivation, via STFT, of a "spectral density as a function of frequency and time" representation **(****Fig. 1b**), also called "time-frequency-distribution" or "spectrogram", from an amplitude-versus-time voice signal (**Fig. 1a**).
- **Fig. 2**: schematically depicts a banknote (S), having a printed spectrogram (A) with a reference for the frequency origin (0) and an upper frequency limit (1) indicator.
- **Fig. 3**: schematically depicts the scanning of a banknote (S), carrying an invisible spectrogram according to the present invention, with the help of a hand-held reading device (R).
- **Fig. 4**: shows the selective IR absorption of the ytterbium (3+) ion in Yb₂O₃ in the spectral wavelength range 900 - 1'000 nm.
- **Fig. 5**: shows the excitation and the emission spectrum of a UV-luminescent.

### Detailed Description

In a first preferred embodiment, said spectrogram is embodied as a watermark in the substrate of the document. A watermark is a document security means which must be implemented in the paper during the paper manufacturing process; the so produced paper remaining marked therewith.

In a second preferred embodiment, said spectrogram is embodied as a laser-marking or as a laser-punched microperforation pattern in the substrate of the document. A laser-marking pattern can be produced through the interaction of a laser beam of suitable wavelength and intensity with a substrate capable to absorb energy from said laser beam, thereby altering its physical constitution. Microperforation is a further development of laser-marking, wherein microscopic holes are perforated into said substrate; it is used as a document security means which can only be produced using particular, not commonly available laser equipment.

In a third preferred embodiment, said spectrogram is embodied in the form of a printed ink, such as an ink comprising a particular colorant, or a particular narrow-band absorbing or reflecting component, embodied as a pigment or a dye.

In a fourth preferred embodiment said spectrogram is embodied in the form of a magnetization pattern which can be read using a magnetic reading head. A magnetization pattern can be produced either through a selective magnetization, on the document or article, of particular zones in a uniform, non-zero-coercivity magnetic coating, or through a selective deposition (e.g. by printing), on the document or article, of particular zones of magnetic material.

In a fifth preferred embodiment said spectrogram is embodied in the form of a magnetic pigment orientation pattern, preferably produced using an engraved magnetic plate for orienting magnetic or magnetizable pigment particles in an applied ink or coating composition, followed by hardening said ink or coating composition. WO 2005/002866 is an example for such an engraved magnetic plate. Particularly preferred magnetic or magnetizable pigment particles are selected from the optically variable magnetic thin-film interference pigments, such as disclosed in US 4,838,648 and in WO 02/73250.

Preferably such spectrogram is printed using a security ink, providing for a particular detectable physical property in the imprinted regions. Said particular detectable physical property is preferably selected from the group consisting of UV-absorption in the wavelength range of 200 to 400 nm, visible absorption in the wavelength range of 400 to 700 nm, IR-absorption in the wavelength range of 700 to 2500 nm, luminescence emission in the UV (200 to 400 nm), visible (400 to 700 nm), or IR (700 to 2500 nm) wavelength ranges, ferro- or ferrimagnetic properties, dielectric permittivity variations, electric conductivity variations, as well as radio frequency absorption variations.

The particularly preferred property of luminescence emission can be embodied using compounds well known in the art, e.g. as described in the Kirk Othmer Encyclopaedia of Chemical Technology 4th edition (published 1994): in Volume 11, pages 227 to 241 under the entry headed "Fluorescent Whitening Agents" and in Volume 15, pages 518 to 607 under the entry headed "Luminescent Materials" especially the sub-entries on pages 562 to 584 entitled "Phosphors" and pages 584 to 607 entitled "Luminescent Materials (Fluorescent)" disclosed in WO 03/101755, or in the "Phosphor Handbook", S. Shionoya and W.M. Yen (eds), CRC Press, 1999. Luminescence emission, in the context of the present disclosure, shall be understood to comprise both, prompt emission, also known as fluorescence, and/or delayed emission, also known as phosphorescence.

The substrate of the document or article is preferably selected from the group consisting of the non-woven substrates such as papers, cardboards, flashspun high-density polyethylene fibers (Tyvek^{®}), etc., the woven substrates such as textiles, the metal foils, and the plastic polymer substrates.

The document may be a security document, preferably selected from the group consisting of the banknotes, the value documents, the identity documents, the access documents, as well as the constituting parts thereof.

Constituting parts of said security document are e.g. security threads, stripes, or windows which are incorporated into the security document, as well as security foils such as holograms and other diffractive optically variable image devices (DOVIDs) which are affixed to the surface of the security document.

Disclosed is as well a method for producing a document or article according to the present invention, the document or article carrying information for its audible authentication, the method comprising the steps of
a) providing audible authentication information;
b) representing said audible authentication information in the form of a spectrogram;
c) embodying the spectrogram of step b) in or on the document or article using document security means.

Further disclosed is a reader device for authenticating a document or article according to the present invention, the document or article carrying information in the form of a spectrogram for its audible authentication, whereby said spectrogram is embodied using document security means; said reader device comprising sensing means sensitive to said document security means and capable to obtain a digital representation of said spectrogram from said document or article; memory means capable to store said digital representation of said spectrogram; processing means capable to transform said stored representation of said spectrogram into an amplitude-versus-time representation; and displaying means capable to display said amplitude-versus-time representation as an audible sound signal.

Further disclosed is a method of authenticating a document or article carrying information for the audible authentication of said document or article according to the present invention, the method comprising the steps of
a) providing a document or article carrying audible authentication information in the form of a spectrogram;
b) exposing said document or article to a reader device according to the present invention, for displaying said audible authentication information as a sound signal.

Further disclosed is the use of a spectrogram, which is embodied in or on a document or article using document security means, for the identification or authentication of said document or article.

The aim of the present invention is to embody information on or in a document or article in the form of a sound record, e.g. an audible security marking. The document or article may be a security document such as a banknote or an identity document, or any other kind of good.

A sound record in the frequency domain of the human ear's sensitivity, ranging from about 10 Hz to about 20 kHz in young people, is able to represent any spoken language and any audible communication signal which can be perceived by a human; such record can be straightforwardly represented as an amplitude-versus-time function, but requires a huge amount of information to be stored.

An intelligible human voice signal can be transmitted in less spectral bandwidth, about 2 to 3 kHz, but this still results, according to the Nyquist theorem, in 4'000 to 6'000 discrete amplitude values which must be reproduced on the document, e.g. as embossing or as bars of different lengths, for every second of recorded voice signal. Assuming an embossing or printing resolution of 50 µm, every second of voice signal would thus occupy a length of 20 to 30 cm on the document, if one would straightforwardly reproduce the amplitude-versus-time function of the voice signal.

Such direct representation of a voice signal on a document can be reproduced with simple means - in case of an embossed voice signal e.g. by a simple gliding over it with a fingernail -, but the amplitude-versus-time signal is not sufficiently compact to allow the embodying of a useful amount of information in the small available area on a document such as a banknote.

The amplitude-versus-time representation of a voice or audio signal is further highly sensitive to any loss of resolution, and its high-frequency parts are particularly affected by the imperfections of the printing or embossing process.

According to the present invention, a more robust and compact representation of the voice or audio signal is therefore implemented on the document or article. To this aim, the voice or audio signal, i.e. the audible security marking, is represented as a spectrogram, i.e. a frequency-versus-time spectral density function, rather than as an amplitude-versus-time function. A spectrogram represents the same audio information, but without requiring any high-resolution representation, nor being sensitive to loss of resolution.

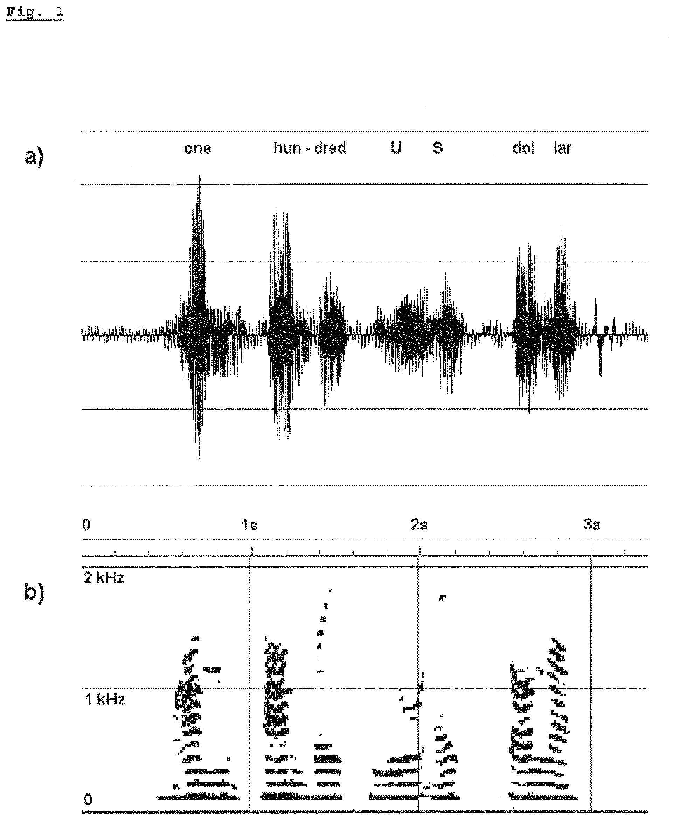

With reference to **Fig. 1****,** an amplitude-versus-time voice signal ("One Hundred US Dollar"; **Fig. 1a****,** the individual beats of the signal are not resolved to detail along the time axis) is decomposed into a "frequency versus time spectral density" representation, also called a "spectrogram" **(****Fig. 1b****).**

The spectrogram can be obtained from the amplitude-versus-time function by means of the Short-Time-Fourier-Transform (STFT) algorithm, such as known in the art. The Short-Time-Fourier-Transform cuts the initial, continuous amplitude-versus-time voice or audio signal into small, overlapping time segments, typically of about 10 to 50 ms length, then applies to each time segment a window function (e.g. a cos² window = "Hann window") in order to bring the amplitude values to zero at both ends of the time segment, and finally transforms each of the windowed time segments into the spectral domain via a Fast Fourier Transform (FFT), resulting in a calculated spectrum. The time overlap is chosen such as to preserve the total spectral energy, i.e. as 50% in case of a cos² window (i.e. if the width of the time segments is chosen to be 40 ms, a spectrum is calculated every 20 ms). The spectrogram is formed by the ordered sequence in time of all so calculated spectra.

The obtained spectrogram is much more compact than the original amplitude-versus-time function from which it was derived, and fits thus easily onto the available space on a document or article, e.g. a banknote or another type of document.

Although Short-Time-Fourier-Transform (STFT) is normally used to calculate spectrograms, the present invention is by no means limited to spectrograms obtained by this particular method.

Alternative ways, known in the art, to obtain spectrograms from an amplitude-versus-time function are, e.g. by the means of a Short-Time Wavelet Transform, a Short-Time Chirplet Transform, by still other mathematical transforms known to the skilled person in signal processing, or in an analogue manner using a filterbank comprising a series of bandpass filters

A spectrogram, in the context of the present description, shall mean a time-varying spectral density representation, also called "time-frequency-distribution" or "frequency-versus-time function", which indicates how the spectral density of the signal varies with time.

The spectrogram representation of a voice or audio signal has the advantages that it is very robust against loss of resolution, such as can easily occur in a printing process, and that there is furthermore no sensible frequency domain which would be particularly affected by such loss of resolution due to printing imperfections. The spectrogram can moreover be simplified to its essential parts, suppressing high-frequency and noisy components, without affecting the intelligibility of the speech.

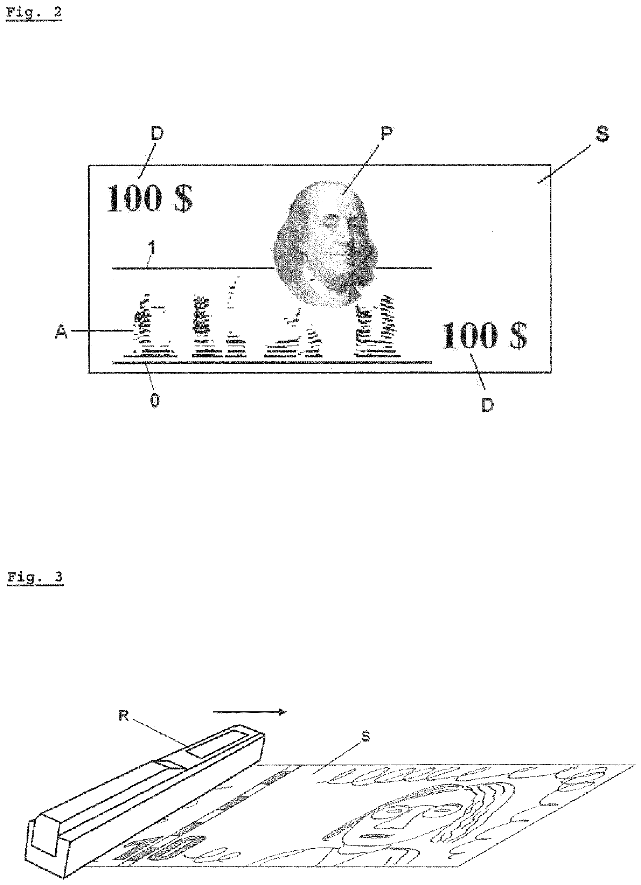

According to the present invention, with reference to **Fig. 2****,** a sound record is thus embodied in or on a document or article, e.g. a banknote, in the form of a spectrogram. The spectrogram can then be read by a reader device (**Fig. 3**), which back-transforms the spectral information into an amplitude-versus-time representation and displays it as an audible sound signal. The back-transforming of the signal is accomplished in the reverse way of the derivation of the spectrogram, applying an inverse-Fourier-transform to each recorded spectral segment; the resulting blocks of amplitude-versus-time signal are subsequently added together according to the time overlap which was applied when deriving the spectrogram.

According to the present invention, the spectrogram is embodied in the document preferably in a form which comprises document security means.

A particularly preferred embodiment of the spectrogram is by the means of a printed ink, in particular a security ink displaying a particular physical property not otherwise present on the same area of the document. Examples of such property are: narrow-band specific absorption in the ultraviolet (UV; 200 to 400 nm), visible (400 to 700 nm), or infrared (IR; 700 to 2, 500 nm) spectral domain, UV-, visible-, or IR-luminescence emission, ferro- or ferrimagnetism, dielectric permittivity variations, electric conductivity variations, and radio-frequency (RF) absorption variations.

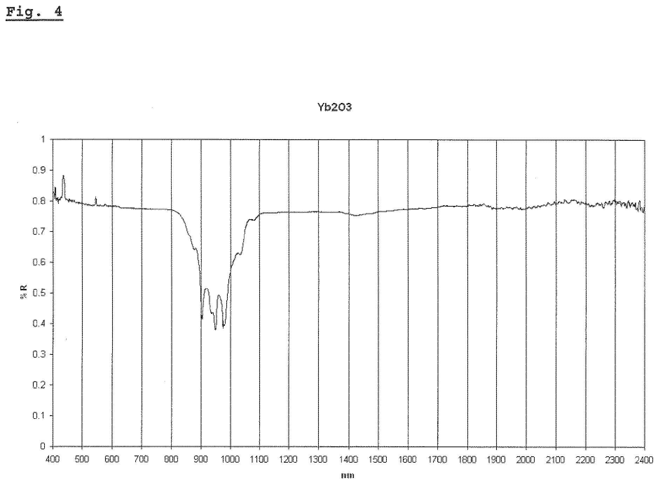

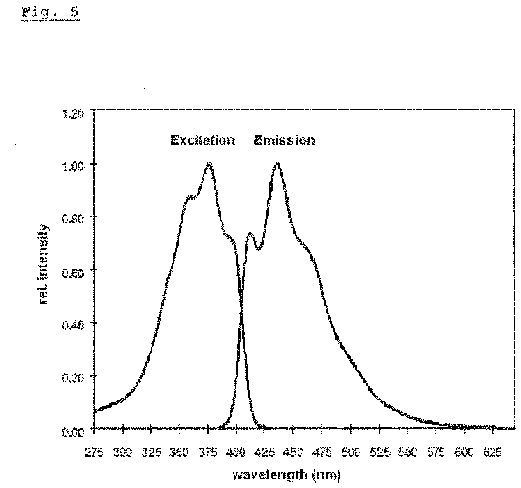

Particularly preferred in this context is an ink comprising an IR-absorber (**Fig. 4**), or an ink comprising a UV-luminescent (**Fig. 5**).

The ink may be formulated for and printed by any suitable printing process, such as offset printing, letterpress printing, screen-printing, gravure / flexographic printing, "copperplate" intaglio printing, or ink-jet printing.

Alternatively, the spectrogram may be printed onto an auxiliary substrate and transferred as a "decal" to a document or article in a separate step, such as disclosed in WO 2011/012520 of the same applicant.

Particularly preferred is a printing ink comprising a narrow-band IR-absorber compound in the form of a pigment or a dye, such as ytterbium phosphate (YbPO₄), ytterbium vanadate (YbVO₄), or another ytterbium (3+) ions containing oxide, glass or organic compound. Ytterbium (3+) ions noteworthy have no coloring properties in the visible spectral range of 400 to 700 nm wavelength, and exhibit a relatively narrow absorption band between 900 and 1000 nm wavelength (**Fig. 4**), i.e. in a spectral region where most of the known organic coloring materials do not absorb. This provides the invention with the advantage of being operable on a security document without interfering with printed visible features or other security elements present on the document.

Light emitting diodes (LEDs) which provide specific illumination in the wavelength range around 950 nm are commercially available, and the sensitivity range of the common, silicon-based photodetector arrays extends up to 1'100 nm wavelength. According to an aspect of the invention, commonly available scanning equipment can thus be modified such as to read the audible security marking, through a mere adaptation of the illuminating system to e.g. 950 nm LEDs, and optionally the addition of an e.g. 900 to 1000 nm optical band-pass filter in front of the silicon based photodetector/reader unit. The scanning equipment then specifically detects the absorption changes on the document in the narrow wavelength range of typically between 900 to 1000 nm, where the ytterbium (3+) based marking absorbs, and therefore specifically reads the invisible spectrogram absorbing in this spectral region.

The spectrogram is preferably embodied on the document as a printed base layer, which may preferably be overprinted with subsequent layers, such as a currency denomination, a portrait, a text, or an ornamental printing, foreseen that the subsequent layers do not impede the reading of the spectrogram. To this aim the subsequent layers must be "transparent" to the means used to read the particular physical property of the security ink used to print the spectrogram.

Other IR-absorber compounds, such as the organic IR-absorbing dyes or pigments, or the inorganic IR-absorbing compounds known in the art, may also be used in place of the ytterbium compound to embody the present invention.

Another particularly preferred embodiment of the spectrogram is in the form of a printing ink comprising a UV-, visible-, or IR-luminescent emitter. Such luminescent emitter has preferably a weak own body color in the visible (400 to 700 nm) domain, such that it does not interfere with the visual perception of the printed security document. Suitable luminescent emitters comprise, on the one hand, the organic luminescents, which may be present in the printing ink in dissolved form or as insoluble pigments, and on the other hand the inorganic luminescents, which are present in the printing ink as pigments.

The organic luminescents comprise on the one hand the purely organic luminescent compounds such as optical brighteners, fluoresceines, rhodamines, or molecules containing the perylene moiety, etc.; for this aspect see WO 03/101755 incorporated herein by reference, and on the other hand the complexes of a luminescent rare-earth activator ion such as Pr³⁺, Nd³⁺, Sm³⁺, Eu³⁺, Tb³⁺, Gd³⁺, Dy³⁺, Ho³⁺, Er³⁺, Tm³⁺, Yb³⁺ with suitable organic ligands.

The inorganic luminescents comprise a suitable host crystal material in pigment form, such as ZnO, ZnS, Al₂O₃, YPO₄, YVO₄, Y₂O₂S, Y₃Al₅O₁₂ etc. , which is doped with one or more activator ions selected from the transition-element ions, such as Cu⁺, Ag⁺, Cr³⁺, Ti³⁺, etc., and/or from the rare-earth-element ions, such as Pr³⁺, Nd³⁺, Sm³⁺, Eu³⁺, Tb³⁺, Gd³⁺, Dy³⁺, Ho³⁺, Er³⁺, Tm³⁺, Yb³⁺.

The luminescent spectrogram is preferably provided as a topcoating over the otherwise finished security document, and before applying the final protecting varnish layer. This ensures that the luminescent emission from the spectrogram is easily read, without obstructions from overprinted further layers. The corresponding reader device has a light source for exciting the luminescent's emission, and a reader unit which is sensitive for the luminescent's emitted radiation. The reader unit may preferably comprise a 2-dimensional focal plane camera (silicon CMOS or CCD), or a 1-dimensional line-scan camera.

With reference to **Fig. 2****,** a document (S) according to the invention comprises an audible spectrogram (A), together with other elements normally present on such document, such as a denomination value (D) and a portrait (P) in case of a banknote. The audible spectrogram (S) has preferably a baseline (O), which serves as a zero-frequency reference to the reading device. An upper frequency limit indicator line (1) may be preferably present, too, in order to define the frequency scale of the spectrogram. The upper frequency limit is typically of the order of 2 to 3 kHz.

The audible spectrogram may contain further information, e.g. a binary pattern in an appropriate form, to indicate the actual value of the upper frequency limit.

Additionally, the time scale may be defined as well by appropriate time markers. Alternatively and preferably, the time scale is simply derived during scanning from the scanning speed.

Disclosed is also a reader device for authenticating a document or article carrying information for its audible authentication according to the invention, said reader device comprising sensing means sensible to a selected particular physical property, operable to obtain a digital representation of a security-printed spectrogram from said document or article; memory means operable to store said digital representation of the spectrogram; processing means operable to transform the stored digital representation of the spectrogram into an amplitude-versus-time representation; and displaying means operable to display said amplitude-versus-time representation as an audible sound signal.

The reader device may preferably be a hand-held scanner. The reader device may further comprise an illuminating system for illuminating the spectrogram in a particular first optical wavelength range, and an optical filter to the reading unit for rendering the latter sensitive to a particular second optical wavelength range.

Said first and said second optical wavelength ranges may further overlap or be substantially the same, so as to provide for wavelength-specific absorption, reflection or translucency scanning.

The reader device (**Fig. 3**) is thus equipped for scanning the spectrogram on the document, based on the document's response corresponding to a selected particular physical property. Preferably a hand-held scanner is used, which is adapted for the purpose of reading the security-printed spectrogram. Further to the provision of an illuminating system to fit, e.g. a particular IR-absorbing compound, and the provision of a corresponding optical filter to the reading unit for rendering it sensitive, e.g. to a particular reflection or emission wavelength, the scanner is also provided with an operating program so as to perform the back-transform of the scanned spectrogram into an amplitude-versus-time representation, and to display said amplitude-versus-time representation as an audible sound signal through a speaker.

The spectrogram may also be embodied in the document in the form of a paper watermark. Paper watermarks are known in the art as paper borne document security means, characterized by translucency variations of the paper. The embodying of the spectrogram in the form of a watermark must be done as a part of the paper manufacturing process, either as a paper thickness modulation, produced as known in the art on the Foudrinier paper machine, e.g. by the means of a "dandy roll", or by applying an appropriate cylinder mould, or as a paper translucency modulation, produced e.g. according to EP 0 721 531, by applying, on the paper machine, a transparentising resin to parts of an unfinished, porous paper sheet, and subsequently impregnating the porous sheet with a sizing resin and processing it as known in the art to form a sheet of paper.

The reading of such watermark spectrogram requires a translucency reader device. Preferably again, the reading of the spectrogram is effectuated in an IR spectral range where many organic coloring materials do not absorb.

In a further embodiment, the spectrogram may be embodied as a laser marking or microperforation pattern; according to e.g. WO 97/18092. Such marking or pattern, which is only visible in translucency, is produced in the finished document with the help of a particularly designed laser equipment, not normally available to the public, and therefore represents a valuable security means. Said microperforation may hereby be applied as holes of any suitable size and form and in any suitable direction with respect to the paper surface. Again, the reading of such spectrogram requires a translucency reader device.

In still a further preferred embodiment, the spectrogram is embodied as a magnetic printing, using a ferromagnetic or ferrimagnetic pigment of appropriate particle size. The magnetic pigment can hereby be hard-magnetic (i.e. permanent-magnetic) or soft-magnetic (i.e. magnetizable). The corresponding reader device must comprise a magnetic image scanner.

In a further preferred embodiment, the spectrogram is embodied in the form of a magnetic pigment orientation pattern, preferably produced using an engraved magnetic plate and the combination with magnets for orienting magnetic or magnetizable pigment particles in an applied ink or coating composition, followed by hardening said ink or coating composition. Particularly preferred magnetic or magnetizable pigment particles are selected from the optically variable magnetic thin-film interference pigments. Examples can be found in WO 2005/002866, WO 2008/046702, US 4,838,648, and WO 02/73250 being enclosed herein by reference.

In still a further preferred embodiment, the spectrogram is embodied as an electrically conductive printing, using an electrically conductive pigment of appropriate conductivity and particle size. The corresponding reader device is designed to scan an electrically conductive image pattern. Such can be achieved by various means, most preferably by a scanning of the document's local radio-frequency transmission/absorption properties.

Disclosed is further a method for producing a document or article carrying information for the audible authentication of said document or article according to the invention, the method comprising embodying a spectrogram representing audible information in or on the document or article using document security means.

Document security means, in the context of the present disclosure, shall comprise any machine-readable material-based or material-implemented feature used in the production of security paper, such as the application of watermarks, planchettes, luminescent compounds or particles, light interference particles, in particular optically variable pigments, magnetic particles, threads, foils, etc.; as well as any machine-readable material-based or material-implemented feature used in the production of security documents, such as imprinting with security inks, intaglio imprinting, embossing, microperforation, etc. The security ink, in turn, may comprise marking substances, such as UV/Vis/IR absorbers, UV/Vis/IR luminescents (i.e. fluorescent or phosphorescent substances), light interference particles, in particular optically variable pigments, magnetic particles, electrically conducting compounds, etc.

The spectrogram of **Fig. 1 b)** can either be directly transferred to a substrate using a variable-information printing process, such as ink-jet printing, laser printing, laser marking, or laser perforation. Alternatively, the spectrogram can be transferred onto a printing plate, into a printing screen, or into a watermarking mould using photolithographic or equivalent image transfer techniques as known to the skilled person.

Disclosed is further a method for authenticating a document or article carrying information for the audible authentication of said document or article according to the invention, the method comprising the steps of
a) providing a document or article carrying audible authentication information in the form of a spectrogram;
b) exposing said document or article to a reader device according to the invention, for displaying said audible authentication information as a sound signal.

Disclosed is as well the use of a spectrogram, which is embodied in or on a document or article using document security means, for the identification or authentication of said document or article.

### Examples

In the example schematically depicted in **Fig. 2****,** the spoken sentence "one hundred US dollars" was recorded and represented as a spectrogram, comprising frequencies in the range between 100 Hz and 2 kHz. The spectrogram has a baseline (0), representing the zero of the frequency scale, and a top line (1), representing the chosen upper frequency limit of 2 kHz.

The recording of the spoken sentence and the generation of the corresponding spectrogram were performed using the commercially available sound recording and editing software "WavePad" for Windows^{®}, distributed by "NCH Software". **Fig. 1** shows the written sentence (at the top), the amplitude-time trace of the corresponding spoken voice record **(a),** and the corresponding time-frequency-distribution **(b).** The total length of the voice record is about 3 sec (see the time-scale indicated in the middle of the figure). It should be noted that the signal of the amplitude-time trace is not fully resolved in the printing, as it comprises about 20'000 amplitude points across the amplitude-time trace; it would thus not be possible to use such printing as a record for reproducing the spoken sentence. On the other hand, the signal is much easier represented in, and reproduced from, the corresponding time-frequency distribution (spectrogram) of **Fig. 1 b)****.**

The spectrogram of **Fig. 1 b)** can either be directly transferred to a substrate using a variable-information printing process, such as ink-jet printing, laser printing, laser marking, or laser perforation. Alternatively, the spectrogram can be transferred onto a printing plate, into a printing screen, or into a watermarking mould using photolithographic or equivalent image transfer techniques known to the skilled person.

The spectrogram according to **Fig. 1 b)** was photolithographically transferred into a printing screen, for use on a flat-bed screen-printing machine.

A piece of banknote paper (S), carrying a fine-line offset background printing, was screen-imprinted with the spectrogram, using a UV-cure-able screen-printing ink of the following formula:

| **Ingredient** | **Formula wt%** |
|---|---|
| Epoxyacrylate oligomer (Sartomer CN118) | 30 |
| Trimethylolpropane triacrylate monomer | 10 |
| Tripropyleneglycol diacrylate monomer | 10 |
| Stabilizer (Genorad 16,Rahn) | 1 |
| Initiator (Irgacure 500, CIBA) | 7 |
| Initiator (Genocure EPD,Rahn) | 2 |
| Ytterbium oxide (Yb₂O₃) | 40 |
| **Total** | **100** |

After UV-curing, the further banknote features, i.e. the portrait (P) and the denomination value (D), were printed by the copperplate intaglio printing process over the already present offset- and screen-printed features, and the numbering, as well as a final protection varnish were applied to the banknote.

The printed spectrogram on the so obtained banknote is read using an image line-scanner according to **Fig. 3****,** equipped with a 950nm LED illumination system such as to specifically scan in the 900 to 1000 nm wavelength range. The scanner's operating program is operable to perform the digital image capturing and the correct scaling of the scanned printed spectrogram, to perform the back-transformation of the scanned spectrogram into an amplitude-versus-time representation, and to display said amplitude-versus-time representation as an audible sound signal through a speaker integrated in the scanner.

In a second example, the banknote paper was watermarked on the paper machine by cylinder-screen-imprinting it with a transparentizing resin, e.g. according to EP 0 721 531, in order to embody the spectrogram according to **Fig. 1 b)** in the form of a translucency modulation. The so watermarked banknote paper can then subsequently be imprinted with banknote features, such as an offset background, a copperplate Intaglio printing and a letterpress numbering, and a final protection varnish can be applied.

The watermark spectrogram can be read in translucency, preferably in the IR spectral range between 900 and 1000 nm, where the usual coloring materials do not absorb. Care must be taken, however, to avoid the use of IR-absorbing pigments, such as carbon black, in the overprinting of the watermark spectrogram.

In a third example, the spectrogram according to **Fig. 1 b)** was embodied in a finished banknote as a laser microperforation pattern. The watermark spectrogram can be read under back-illumination, without any particular illumination wavelength being preferred, whereas it remains invisible under front illumination. This serves also as a proof of an authentic microperforation pattern.

In a fourth example, the spectrogram according to **Fig. 1 b)** was embodied by an optical brightener and ink-jet-printed over a finished, but still unvarnished banknote, using a formula according to EP 0 730 014:

| | |
|---|---|
| Methyl ethyl ketone (MEK) | 63.7 wt% |
| Ethanol | 20.0 wt% |
| Nitrocellulose RS (12% nitrogen contents; viscosity of 15 cps for 12% solution) | 6.0 wt% |
| Polyurethane (Surkopak 5244, Kane Int. Corp.) | 5.0 wt% |
| Plastilizer (Sancticizer B, Monsanto) | 1.0 wt% |
| Bis(acetylacetonate) diisopropoxicle titanium (Tyzor GBA, DuPont) | 1.5 wt% |
| Optical brightener (Uvitex OB, Ciba) | 2.0 wt% |
| Polymeric non-ionic fluorosurfactant (FC 430 10% in MEK, 3M Co) | 0.3 wt% |
| Lithium perchlorate (LiClO₄) | 0.5 wt% |

After drying of the solvent-based printed inkjet ink, the printed spectrogram is invisible under ambient light and quite resistant to water and hydroxylated solvents; its resistance can be further increased by coating the banknote with a protection varnish.

The optical brightener in the spectrogram is visible and readable in the 400 to 500 nm wavelength range under illumination with "longwave UV" in the 350 to 400 nm wavelength range **(****Fig. 5****).**

The printed spectrogram on the so obtained banknote is read using an image line-scanner according to **Fig. 3****,** equipped with a 380nm LED illumination system so as to excite the optical brightener's luminescence. The scanner's reader unit is provided with an optical transmission filter for the 450 to 500 nm wavelength range, for limiting its sensitivity to the optical brightner's characteristic emission range. The scanner's operating program is operable such as to perform the digital capturing and correct scaling of the scanned printed spectrogram, to perform the back-transformation of the scanned spectrogram into an amplitude-versus-time representation, and to display said amplitude-versus-time representation as an audible sound signal through a speaker integrated in the scanner.

Application of the spectrogram by a variable-information printing technique such as ink-jet printing or laser-printing has the advantage to provide for the possibility of personalization of the security document. In such way, a document such as a passport or an access card can be personalized by making it carry a voice record of its owner. Such voice record can, e.g. be ink-jet printed or laser-printed onto the security document, and secured by an over-lamination with a security foil, such as used in the art for the protection personalization information.

In a fifth example, the spectrogram according to Fig. 1 b) was embodied in the form of a magnetic pigment orientation pattern in an optically variable magnetic printing ink. To this aim, the spectrogram was engraved into a magnetized permanent-magnetic "plastoferrite" plate, e.g. according to WO 2005/002866, which was used to orient optically variable magnetic pigment flakes in a screen-printed UV-curable ink composition, applied as a rectangular ink patch onto a banknote substrate. The pigment flakes were then fixed in their respective orientations and positions by UV-curing the applied ink composition.

The spectrogram, represented as an optically variable magnetic pigment orientation pattern, is on the one hand a very appealing visual decorative feature. On the other hand, the sound value of the spectrogram may be displayed by scanning the banknote with a magnetic image scanner.

## Claims

1. Document or article carrying audible information for the audible authentication of said document or article, **characterized in that** the audible information is present in or on the document or article in the form of a spectrogram, the spectrogram being embodied using document security means, said spectrogram being a frequency-versus time function.

2. Document or article according to claim 1, wherein said spectrogram is embodied as a watermark.

3. Document or article according to claim 1, wherein said spectrogram is embodied as a laser-marking or a laser-punched microperforation pattern.

4. Document or article according to claim 1, wherein said spectrogram is embodied in the form of a printed ink.

5. Document or article according to claim 1, wherein said spectrogram is embodied in the form of a magnetization pattern.

6. Document or article according to claim 1, wherein said spectrogram is embodied in the form of a magnetic pigment orientation pattern.

7. Document or article according to claim 4, wherein the ink is a security ink providing for a particular detectable physical property selected from the group consisting of UV-, visible-, and IR-absorption, UV-, visible-, and IR-luminescence emission, ferro- and ferrimagnetism, dielectric permittivity variation, electric conductivity variation, and RF-absorption variation.

8. Document or article according to one of claims 1 to 7, wherein the document or article comprises a substrate selected from the group consisting of the non-woven substrates such as papers, cardboards and Tyvek, the woven substrates such as textiles, the metal foils, and the plastic polymer substrates.

9. Document or article according to one of claims 1 to 8, wherein the document is selected from the group consisting of the banknotes, the value documents, the identity documents, the access documents and the constituting parts thereof.

10. Method for producing a document or article according to one of claims 1 to 9, the document or article carrying audible information for its audible authentication, the method comprising embodying a spectrogram being a frequency-versus-time function and representing audible information in or on the document or article using document security means.

11. Method according to claim 10, wherein said spectrogram is directly transferred to a document or article using a variable-information printing process, such as ink-jet printing, laser printing, laser marking or laser perforation.

12. Method according to claim 10, wherein said spectrogram is transferred onto a printing plate, into a printing screen, or into a watermarking mould using photolithographic or equivalent image transfer techniques.

13. Reader device for authenticating a document or article according to one of the claims 1 to 9, the document or article carrying audible information in the form of a spectrogram for its audible authentication, whereby said spectrogram is embodied using document security means, said reader device comprising sensing means sensitive to said document security means and capable to obtain a digital representation of said spectrogram from said document or article; memory means capable to store said digital representation of said spectrogram; processing means capable to transform the stored representation of said spectrogram into an amplitude-versus-time representation; and displaying means capable to display said amplitude-versus-time representation as an audible sound signal.

14. Reader device according to claim 13, wherein the reader device is a hand-held scanner.

15. Reader device according to one of claims 13 to 14, wherein the reader device comprises an illuminating system for illuminating the document or article in a particular first optical wavelength range, and optical sensing means able to read the document or article in a particular second optical wavelength range.

16. Reader device according to claim 15, wherein said first and said second optical wavelength ranges are substantially the same, so as to provide for wavelength-specific absorption or translucency scanning.

17. Method for authenticating a document or article carrying audible information for the audible authentication of said document or article according to one of claims 1 to 9, the method comprising the steps of
a) providing a document or article carrying audible authentication information in the form of a spectrogram being a frequency-versus-time function;
b) exposing said document or article to a reader device according to one of claims 13 to 16, for displaying said audible authentication information as a sound signal.

18. Use of a spectrogram, being a frequency-versus-time function, which is embodied in or on a document or article for the identification or authentication of said document or article.

## Patentansprüche

1. Dokument oder Gegenstand, der hörbare Informationen trägt, um das Dokument oder den Gegenstand hörbar zu authentifizieren,
**dadurch gekennzeichnet, dass** die hörbaren Inforationen in oder auf dem Dokument oder Gegenstand in Form eines Spektrogramms vorhanden sind, wobei das Spektrogramm unter Verwendung von Dokumentsicherheitsmitteln verkörpert ist, wobei das Spektrogramm eine Frequenz/Zeit-Funktion ist.

2. Dokument oder Gegenstand nach Anspruch 1, wobei das Spektrogramm als ein Wasserzeichen verkörpert ist.

3. Dokument oder Gegenstand nach Anspruch 1, wobei das Spektrogramm als eine Lasermarkierung oder ein Laserlochungs-Mikroperforationsmuster verkörpert ist.

4. Dokument oder Gegenstand nach Anspruch 1, wobei das Spektrogramm in Form gedruckter Tinte verkörpert ist.

5. Dokument oder Gegenstand nach Anspruch 1, wobei das Spektrogramm in Form eines Magnetisierungsmusters verkörpert ist.

6. Dokument oder Gegenstand nach Anspruch 1, wobei das Spektrogramm in Form eines Orientierungsmusters magnetischer Pigmente verkörpert ist.

7. Dokument oder Gegenstand nach Anspruch 4, wobei die Tinte eine Sicherheitstinte ist, um eine besondere detektierbare physikalische Eigenschaft bereitzustellen, die aus der Gruppe gewählt ist die besteht aus UV-Absorption, Absorption im sichtbaren Bereich und IR-Absorption, UV-Lumineszenzemission, Lumineszenzemission im sichtbaren Bereich und IR-Lumineszenzemission, Ferro- und Ferrimagnetismus, Änderung der Dielektrizitätskonstanten, Änderung der spezifischen elektrischen Leitfähigkeit und Änderung der HF-Absorption.

8. Dokument oder Gegenstand nach einem der Ansprüche 1 bis 7, wobei das Dokument oder Gegenstand ein Substrat umfasst, das aus der Gruppe gewählt ist, die aus nicht gewebten Substraten wie etwa Papieren, Kartons und Tyvek, gewebten Substraten wie etwa Textilien, Metallfolien und Kunststoffpolymer-Substraten besteht.

9. Dokument oder Gegenstand nach einem der Ansprüche 1 bis 8, wobei das Dokument aus der Gruppe gewählt ist, die aus Banknoten, Wertpapieren, Identitätsdokumenten, Zugangsdokumenten und den Bestandteilen hiervon besteht.

10. Verfahren zum Herstellen eines Dokuments oder Gegenstands nach einem der Ansprüche 1 bis 9, wobei das Dokument oder der Gegenstand hörbare Informationen für seine hörbare Authentifizierung trägt, wobei das Verfahren das Verkörpern eines Spektrogramms, das eine Frequenz/Zeit-Funktion ist, und das Darstellen der hörbaren Informationen in oder auf dem Dokument oder dem Gegenstand unter Verwendung von Dokumentsicherheitsmitteln umfasst.

11. Verfahren nach Anspruch 10, wobei das Spektrogramm auf ein Dokument oder einen Gegenstand unter Verwendung eines variablen Informationsdruckprozesses wie etwa eines Tintenstrahldrucks, eines Laserdrucks, einer Lasermarkierung oder einer Laserperforation direkt übertragen wird.

12. Verfahren nach Anspruch 10, wobei das Spektrogramm auf eine Druckplatte, in ein Drucksieb oder in eine Wasserzeichenform unter Verwendung photolithographischer oder äquivalenter Bildübertragungstechniken übertragen wird.

13. Lesevorrichtung zum Authentifizieren eines Dokuments oder Gegenstands nach einem der Ansprüche 1 bis 9, wobei das Dokument oder der Gegenstand hörbare Informationen in Form eines Spektrogramms für seine hörbare Authentifizierung trägt, wobei das Spektrogramm unter Verwendung von Dokumentsicherheitsmitteln verkörpert ist, wobei die Lesevorrichtung Folgendes umfasst: Erfassungsmittel, die auf die Dokumentsicherheitsmittel ansprechen und eine digitale Darstellung des Spektrogramms von dem Dokument oder Gegenstand erhalten können; Speichermittel, die die digitale Darstellung des Spektrogramms speichern können; Verarbeitungsmittel, die die gespeicherte Darstellung des Spektrogramms in eine Amplituden/ZeitDarstellung transformieren können; und Anzeigemittel, die die Amplituden/Zeit-Darstellung als ein hörbares Schallsignal ausgeben können.

14. Lesevorrichtung nach Anspruch 13, wobei die Lesevorrichtung ein tragbarer Scanner ist.

15. Lesevorrichtung nach einem der Ansprüche 13 bis 14, wobei die Lesevorrichtung ein Beleuchtungssystem, um das Dokument oder den Gegenstand in einem bestimmten ersten optischen Wellenlängenbereich zu beleuchten, und optische Erfassungsmittel, die das Dokument oder den Gegenstand in einen bestimmten zweiten optischen Wellenlängenbereich lesen können, umfasst.

16. Lesevorrichtung nach Anspruch 15, wobei der erste und der zweite optische Wellenlängenbereich im Wesentlichen übereinstimmen, um so eine wellenlängenspezifische Absorption oder eine Lichtdurchlässigkeitsabtastung bereitzustellen.

17. Verfahren zum Authentifizieren eines Dokuments oder eines Gegenstands, das bzw. der hörbare Informationen für die hörbare Authentifizierung des Dokuments bzw. Gegenstands trägt, nach einem der Ansprüche 1 bis 9, wobei das Verfahren die folgenden Schritte umfasst:
a) Bereitstellen eines Dokuments oder Gegenstands, das bzw. der hörbare Authentifizierungsinformationen in Form eines Spektrogramms, das eine Frequenz/ZeitFunktion ist, trägt;
b) Anwenden einer Lesevorrichtung nach einem der Ansprüche 13 bis 16 auf das Dokument oder den Gegenstand, um die hörbaren Authentifizierungsinformationen als ein Schallsignal auszugeben.

18. Verwendung eines Spektrogramms, das eine Frequenz/Zeit-Funktion ist, das in oder auf einem Dokument oder Gegenstand verkörpert ist, um das Dokument oder den Gegenstand zu identifizieren oder zu authentifizieren.

## Revendications

1. Document ou article portant des informations audibles pour l'authentification audible dudit document ou article, **caractérisé en ce que** les informations audibles sont présentes dans ou sur le document ou article sous forme d'un spectrogramme, le spectrogramme étant intégré à l'aide d'un moyen de sécurité de document, ledit spectrogramme étant une fonction de fréquence en fonction du temps.

2. Document ou article selon la revendication 1, dans lequel ledit spectrogramme est intégré en tant que filigrane.

3. Document ou article selon la revendication 1, dans lequel ledit spectrogramme est intégré en tant que marquage laser ou motif de microperforation poinçonné au laser.

4. Document ou article selon la revendication 1, dans lequel ledit spectrogramme est intégré sous forme d'encre imprimée.

5. Document ou article selon la revendication 1, dans lequel ledit spectrogramme est intégré sous forme de motif d'aimantation.

6. Document ou article selon la revendication 1, dans lequel ledit spectrogramme est intégré sous forme d'un motif d'orientation de pigment magnétique.

7. Document ou article selon la revendication 4, dans lequel l'encre est une encre de sécurité permettant une propriété physique détectable particulière choisie dans le groupe constitué de l'absorption d'ultraviolet, visible, et d'infrarouge, de l'émission de luminescence d'ultraviolet, visible et d'infrarouge, du ferro- et ferrimagnétisme, de la variation de permittivité diélectrique, de la variation de conductivité électrique, et de la variation d'absorption de radiofréquence.

8. Document ou article selon l'une des revendications 1 à 7, dans lequel le document ou article comprend un substrat choisi dans le groupe constitué des substrats non tissés tels que les papiers, les cartons et le Tyvek, des substrats tissés tels que les textiles, les feuilles de métal, et les substrats en polymère plastique.

9. Document ou article selon l'une des revendications 1 à 8, dans lequel le document est choisi dans le groupe constitué de billets de banque, des documents de valeur, des documents d'identité, des documents d'accès et de leurs parties constituantes.

10. Procédé de production d'un document ou d'un article selon l'une des revendications 1 à 9, le document ou l'article portant des informations audibles pour son authentification audible, le procédé comprenant l'intégration d'un spectrogramme qui est une fonction de fréquence en fonction du temps et la représentation d'informations audibles dans ou sur le document ou article à l'aide d'un moyen de sécurité de document.

11. Procédé selon la revendication 10, dans lequel ledit spectrogramme est transféré directement à un document ou article à l'aide d'un processus d'impression d'informations variables, telle qu'une impression à jet d'encre, une impression laser, un marquage laser ou une perforation au laser.

12. Procédé selon la revendication 10, dans lequel ledit spectrogramme est transféré sur une plaque d'impression, dans une trame pour impression, ou dans un moule filigraneur à l'aide de techniques de transfert d'images photolithographiques ou équivalentes.

13. Dispositif lecteur pour authentifier un document ou article selon l'une des revendications 1 à 9, le document ou article portant des informations audibles sous forme d'un spectrogramme pour son authentification audible, moyennant quoi ledit spectrogramme est intégré à l'aide d'un moyen de sécurité de document, ledit dispositif lecteur comprenant un moyen de détection sensible audit moyen de sécurité de document et capable d'obtenir une représentation numérique dudit spectrogramme à partir dudit document ou article ; un moyen de mémoire capable de stocker ladite représentation numérique dudit spectrogramme ; un moyen de traitement capable de transformer la représentation stockée dudit spectrogramme en une représentation d'amplitude en fonction du temps ; et un moyen d'affichage capable d'afficher ladite représentation d'amplitude en fonction du temps en tant que signal sonore audible.

14. Dispositif lecteur selon la revendication 13, dans lequel le dispositif lecteur est un scanner à main.

15. Dispositif lecteur selon l'une des revendications 13 à 14, dans lequel le dispositif lecteur comprend un système d'illumination pour illuminer le document ou article dans une première plage de longueurs d'onde optique particulière, et un moyen de détection optique capable de lire le document ou article dans une seconde plage de longueurs d'onde optique particulière.

16. Dispositif lecteur selon la revendication 15, dans lequel lesdites première et seconde plages de longueurs d'onde optique sont sensiblement les mêmes, de façon à permettre une absorption spécifique à la longueur d'onde ou un balayage de translucidité.

17. Procédé d'authentification d'un document ou article portant des informations audibles pour l'authentification audible dudit document ou article selon l'une des revendications 1 à 9, le procédé comprenant les étapes de :
a) fourniture d'un document ou article portant des informations d'authentification audible sous forme d'un spectrogramme qui est une fonction de fréquence en fonction du temps ;
b) exposition dudit document ou article à un dispositif lecteur selon l'une des revendications 13 à 16, pour afficher lesdites informations d'authentification audibles en tant que signal sonore.

18. Utilisation d'un spectrogramme, qui est une fonction de fréquence en fonction du temps, qui est intégré dans ou sur un document ou article pour l'identification ou l'authentification dudit document ou article.
